# EUROPEAN PATENT APPLICATION

(11) **EP 3 915 835 A1**
(43) Date of publication of application: **01.12.2021**
(21) Application number: 20176854.6
(22) Date of filing: 27.05.2020
(51) Int. Cl.: B60Q 1/068

(54) **ADJUSTING DEVICE**

(71) Applicant: ZKW Group GmbH, 3250 Wieselburg (AT)
(72) Inventor: Toman, Dominik, 95621 Tesáre (SK); Kravcik, Martin, 08001 Presov (SK); Peniaska, Marek, 95852 Zabokreky nad Nitrou (SK); Kucka, Tomás, 95144 Výèapy/Opatovce (SK); Zubaj, Andrej, 956 19 Krnca (SK)
(74) Representative: Patentanwaltskanzlei Matschnig & Forsthuber OG

(57) **Abstract**

Adjusting device (10) for adjusting at least one optically relevant component of a motor vehicle headlamp, which adjusting device (10) comprises:
- an actuating element (50) rotatable about a first rotary axis (X),
- a coupling element (60) for engaging with the at least one optically relevant component,
- a housing (70) in which the actuating element (50) is rotatable mounted about the first rotary axis (X),
- a first transmission element (100) in mechanical engagement with the actuating element (50),
- a second transmission element (200) in mechanical engagement with the actuating element (50),
- an adapter element (300) mountable on the housing (70), wherein the adapter element (300) is configured to mount the first transmission element (100), wherein the housing (70) comprises a securing device (400), and wherein the securing device (400) is configured to secure the adapter element (300) in an end position (PI) on the housing (70), wherein the securing device (400) comprises a base section (410) and a first fastening element (410a), wherein the adapter element (300) comprises a mounting-opening (310) and a second fastening element (310a), wherein the securing device (400) is arranged in a way, that allows the adapter element (300) to be brought into the end position (PI) by inserting the mounting-opening (310) on the base section (410) and moving the adapter element (400) along the first rotary axis (X) until the end position (PI) is reached, such that the second fastening element (310a) engages with the first fastening element (410a) to secure the adapter element (300) in the end position (PI).

## Description

The invention relates to an adjusting device for adjusting at least one optically relevant component of a motor vehicle headlamp, which adjusting device comprises:
- an actuating element rotatable about a first rotary axis and having two distal ends and a thread portion arranged in between these ends, and a first and a second engaging portion, said first engaging portion disposed on one distal end and said second engaging portion disposed on the other distal end,
- a coupling element for engaging with the at least one optically relevant component, said coupling element having a counter-thread portion corresponding to the thread portion of the actuating element, wherein the coupling element is slidably mounted on the actuating element by means of the counter-thread portion, in order to translate a rotational movement of the actuating element to a linear movement along the first rotary axis
- a housing in which the actuating element is rotatable mounted about the first rotary axis by means of at least one bearing section of the actuating element,
- a first transmission element in mechanical engagement with the actuating element, said first transmission element having a first counter-engaging portion corresponding to the first engaging portion of the actuating element, wherein the first transmission element is rotatable about a second rotary axis, wherein the first transmission element is configured to engage with the first engaging portion in order to transmit an angular motion about the second rotary axis of the first transmission element into an angular motion of the actuating element about the first rotary axis,
- a second transmission element in mechanical engagement with the actuating element, said second transmission element having a second counter-engaging portion corresponding to the second engaging portion of the actuating element, wherein the second transmission element is rotatable about the first rotary axis, wherein the second transmission element is configured to engage with the second engaging portion in order to transmit an angular motion of the second transmission element into an angular motion of the actuating element about the first rotary axis, said second transmission element being coaxial to the actuating element,
   wherein the actuating element with the thread portion in combination with the counter-thread portion of the coupling element in order to translate a rotational movement of the actuating element to a linear movement along the first rotary axis, is configured to convert an angular motion of the first or second transmission element into a linear movement of the coupling element along the first rotary axis,
- an adapter element mountable on the housing in an end position, wherein the adapter element is configured to mount the first transmission element in an engaging position, wherein in said engaging position the first transmission element engages with the actuating element, and wherein the housing comprises a securing device, which is disposed on the housing, and wherein the securing device is configured to secure the adapter element in the end position of the adapter element on the housing.

The invention also relates to a vehicle headlamp comprising at least one aforementioned adjusting device.

In order to adjust the light pattern produced by a headlamp in conformity with the law, it is necessary that one or more optically relevant units of the headlamp be adjustable, inter alia, in height and/or laterally. Such a relevant optical assembly unit is, for example, a light module, for example consisting of at least one light source, at least one reflector, at least one lens, etc.; however, it may also be individual components such as reflectors, lenses, etc., which are adjusted accordingly.

In this case, the at least one optically relevant structural unit is often mounted in the headlamp so as to be pivotable about one or more axes, for example about a horizontal and/or vertical axis. For example, one or more light modules are mounted on a support frame, and the support frame is mounted so as to be pivotable about one or two axes, as described above.

Adjustment devices for adjusting optically relevant components of motor vehicle headlamps, such as light sources, reflectors and/or lenses, allow the light pattern produced by the headlamp to be adapted to specified requirements. This makes it possible to subsequently compensate for deviations from target specifications, which are determined, for example, after the headlamp has been installed in a motor vehicle, by using an adjusting device.

At least one drive unit is usually provided for adjustment, the drive unit usually being manually operable, for example the drive unit comprises a rotary wheel or adjusting screw, the rotary movement of which is converted via a suitable mechanism into a linear movement of a coupling element, which is displaceable guided in corresponding slide ways in the headlamp housing. An adjustment point of the optically relevant component, e.g. the support frame, to which the component is attached, is mounted in the coupling element, so that when the coupling element is displaced, the component or the support frame is pivoted.

It is an object of the invention to provide an enhanced adjusting device.

To achieve this object, the securing device comprises a base section and a first fastening element, which is arranged on the base section, wherein the adapter element comprises a mounting-opening and a second fastening element,
wherein the securing device is arranged in a way, that allows the adapter element to be brought into the end position on the securing device by inserting the mounting-opening on the base section of the securing device and moving the adapter element along the first rotary axis until the end position is reached, such that the second fastening element of the adapter element engages with the first fastening element of the securing device to secure the adapter element in the end position.

Such an adjusting device with the adapter element according to the invention allows the use of different long adjusting elements, so that the adjusting device can be easily adjusted to the given conditions, for example the installation space in a motor vehicle headlamp, at any time.

Advantageously, the adapter element comprises a guide section built as at least one groove, which extends parallel to the first rotary axis, and the base section comprises at least one guiding-element corresponding to the at least one groove, wherein the at least one groove is configured to receive the at least one guiding-element, when the adapter element is brought into the end position, such that the guiding-element in combination with the at least one groove lead the adapter element into the end position and secure the adapter element against a rotary movement around the first rotary axis, when the adapter element is in the end position.

This provides a defined alignment of the mounting position of the adapter element, which enables a safe mounting process and prevents incorrect mounting of the adapter element on the housing. Further, the adapter element is secured against a rotary movement about the first rotary axis in the end position.

Advantageously, the adapter element comprises at least one fastening rib, which protrudes inside the mounting-opening of the adapter element parallel to the first rotary axis.

This can compensate possible variations in the production of the housing or the base section and/or the adapter element, as these ribs reduce the clearance between the base section and the mounting opening, so that the adapter element has a tight fit in the end position during and/or after insertion. This can prevent the adapter element from moving out of the end position, for example in the event of vibrations occurring during driving of a vehicle, so that the first transmission element is no longer correctly in the engaging position.

Advantageously, the base section of the securing device comprises an abutment-portion, wherein the adapter element abuts on the abutment-portion when the adapter element is brought into the end position in order to limit the movement of the adapter element along the first rotary axis.

Advantageously, the first fastening-element of the securing device is built as latching-element, wherein the second fastening-element of the securing device is built as a counter latching-element.

Advantageously, the first fastening element of the securing device is built as a rigid protrusion on the base section and the second fastening element is built as a detent lug, wherein the rigid protrusion snaps in the detent lug, when the adapter element is brought into the end position.

Advantageously, the rigid protrusion comprises a stopping edge and the detent lug comprises a snap-in edge, wherein the stopping edge and the snap-in edge are formed positively interlocked and built a virtual straight line, when the adapter element is in the end position, and wherein the virtual straight line arranged such that an angle formed between the virtual straight line and the direction of rotation around the first rotary axis is greater than zero.

This can prevent the adapter element from performing an undesired rotating movement about the first rotary axis in the end position.

Advantageously, the housing and the securing device are made of an integral piece of material, preferably made of one material.

Advantageously, the second rotary axis is orthogonal to the first rotary axis.

Advantageously, the base section of the securing device is protruding along the first rotary axis.

The object of the invention is also achieved by a vehicle headlamp comprising at least one adjusting device according to the invention.

In the following, in order to further demonstrate the present invention, illustrative and non-restrictive embodiments are discussed, as shown in the drawings, which show:
Fig. 1 a side view of an example of an adjusting device with an actuating element, which engages with a first and second transmission element, and an adapter element, which is mounting the first transmission element and is in an end position on a securing device of a housing, in which the actuating element is mounted,
Fig. 2 a detailed view of the second transmission element engaging with the actuating element,
Fig. 3 another side view of the adjusting device of Fig. 1,
Fig. 4 an exploded view of the shown example in Fig. 1,
Fig. 5A a detailed perspective view of the adapter element in the end position on the housing,
Fig. 5B another perspective view of the adapter element in Fig. 5A,
Fig. 5C another perspective view of the adapter element in Fig. 5A,
Fig. 6 a detailed view of the adapter element in the end position on the securing device and a first and second fastening element, and
Fig. 7 a perspective view of the adapter element with comprising ribs.

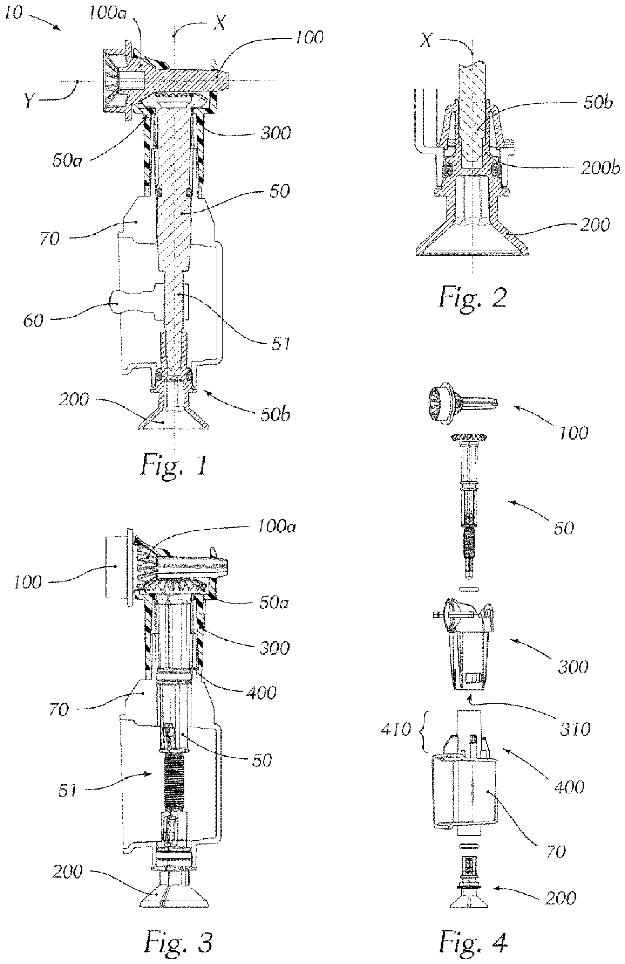

**Fig. 1** shows an adjusting device **10** for adjusting at least one optically relevant component of a motor vehicle headlamp, which adjusting device **10** comprises an actuating element **50** rotatable about a first rotary axis **X** and having two distal ends and a thread portion **51** arranged in between those ends, and a first and a second engaging portion **50a, 50b,** said first engaging portion **50a** disposed on one distal end and said second engaging portion **50b** disposed on the other distal end.

Further, the adjusting device **10** comprises a coupling element **60** for engaging with the at least one optically relevant component, said coupling element **60** having a counter-thread portion corresponding to the thread portion **51** of the actuating element **50,** wherein the coupling element **60** is slidably mounted on the actuating element **50** by means of the counter-thread portion, in order to translate a rotational movement of the actuating element **50** to a linear movement along the first rotary axis **X.** Such a relevant optical assembly unit is, for example, a light module, for example consisting of at least one light source, at least one reflector, at least one lens, etc.; however, it may also be individual components such as reflectors, lenses, etc., which are adjusted accordingly.

The adjusting device **10** also comprises a housing **70** in which the actuating element **50** is rotatable mounted about the first rotary axis **X** by means of at least one bearing section of the actuating element **50,** and a first transmission element **100** in mechanical engagement with the actuating element **50,** said first transmission element **100** having a first counter-engaging portion **100a** corresponding to the first engaging portion **50a** of the actuating element **50,** wherein the first transmission element **100** is rotatable about a second rotary axis **Y,** wherein the first transmission element **100** is configured to engage with the first engaging portion **50a** in order to transmit an angular motion about the second rotary axis **Y** of the first transmission element **100** into an angular motion of the actuating element **50** about the first rotary axis **X.** In the shown example, the second rotary axis **Y** is orthogonal to the first rotary axis **X.**

The adjusting device **10** further comprises a second transmission element **200** in mechanical engagement with the actuating element **50,** said second transmission element **200** having a second counter-engaging portion **200b,** which can be seen in more detail in **Fig. 2****,** corresponding to the second engaging portion **50b** of the actuating element **50,** wherein the second transmission element **200** is rotatable about the first rotary axis **X,** wherein the second transmission element **200** is configured to engage with the second engaging portion **50b** in order to transmit an angular motion of the second transmission element **200** into an angular motion of the actuating element **50** about the first rotary axis **X,** said second transmission element **200** being coaxial to the actuating element **50.**

The actuating element **50** with the thread portion **51** in combination with the counter- thread portion of the coupling element **60,** in order to translate a rotational movement of the actuating element **50** to a linear movement along the first rotary axis **X,** is configured to convert an angular motion of the first or second transmission element **100, 200** into a linear movement of the coupling element **60** along the first rotary axis **X.**

Further, the adjusting device **10** comprises an adapter element **300** mountable on the housing **70** in an end position **P1,** wherein the adapter element **300** is configured to mount the first transmission element **100** in an engaging position, wherein in said engaging position the first transmission element **100** engages with the actuating element **50,** and wherein the housing **70** comprises a securing device **400,** which can be seen in more detail in **Fig. 3** and **4****,** and is disposed on the housing **70,** and wherein the securing device **400** is configured to secure the adapter element **300** in the end position **P1** of the adapter element **300** on the housing **70.** The housing **70** and the securing device **400** are made of an integral piece of material, preferably made of one material.

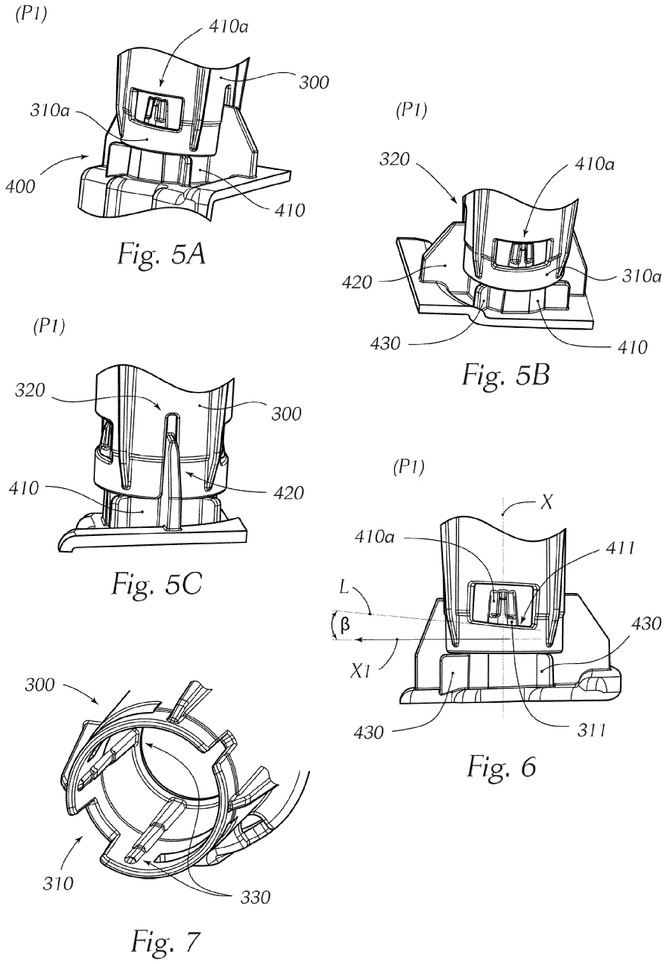

As can be seen in **Fig. 4****,** **5A** and **5B****,** the securing device **400** comprises a base section **410,** which is protruding from the housing **70** along the first rotary axis **X,** and a first fastening element **410a,** which is arranged on the base section **410,** wherein the adapter element **300** comprises a mounting-opening **310** and a second fastening element **310a,** wherein the securing device **400** is arranged in a way, that allows the adapter element **300** to be brought into the end position **P1** on the securing device **400** by inserting the mounting-opening **310** on the base section **410** of the securing device **400** and moving the adapter element **300** along the first rotary axis **X** until the end position **P1** is reached, such that the second fastening element **310a** of the adapter element **300** engages with the first fastening element **410a** of the securing device **400** to secure the adapter element **300** in the end position **P1**.

The adapter element **300** also comprises a guide section **320** built as at least one groove, which extends parallel to the first rotary axis **X,** and the base section **410** comprises at least one guiding-element **420** corresponding to the at least one groove, wherein the at least one groove is configured to receive the at least one guiding-element **420,** when the adapter element **300** is brought into the end position **P1**, such that the guiding-element **420** in combination with the at least one groove lead the adapter element **300** into the end position **P1** and secure the adapter element **300** against a rotary movement around the first rotary axis **X,** when the adapter element **300** is in the end position **P1**, which can be seen for example in **Fig. 5C****.**

As **Fig. 6** shows in more detail, the first fastening-element **410a** of the securing device **400** is built as a rigid protrusion on the base section **410** and the second fastening-element **310a** is built as a detent lug, wherein the rigid protrusion snaps in the detent lug, when the adapter element **300** reaches the end position **P1**. The rigid protrusion comprises a stopping edge **411** and the detent lug comprises a snap-in edge 311, wherein the stopping edge **411** and the snap-in edge **311** are formed positively interlocked and built a virtual straight line **L,** when the adapter element **300** is in the end position **P1**, and wherein the virtual straight line **L** arranged such that an angle **β** formed between the virtual straight line **L** and the direction of rotation **X1** around the first rotary axis **X** is greater than zero.

Further, the base section **410** of the securing device **400** comprises at least one abutment-portion **430,** wherein the adapter element **300** abuts on the abutment-portion **430,** when the adapter element **300** reaches the end position **P1** in order to limit the movement of the adapter element **300** along the first rotary axis **X,** as can also be seen in more detail in **Fig. 6****.**

In the shown example, the adapter element **300** comprises at least one fastening rib **330,** preferably four ribs (in Fig. 7 only two of the four ribs can be seen), which protrudes inside the mounting-opening **310** of the adapter element **300** parallel to the first rotary axis **X,** as can be seen in **Fig. 7****.**

### LIST OF REFERENCE SIGNS

| | |
|---|---|
| Adjusting device... | 10 |
| Actuating element... | 50 |
| First engaging portion... | 50a |
| Second engaging portion... | 50b |
| Thread portion... | 51 |
| Coupling element... | 60 |
| Housing... | 70 |
| First transmission element... | 100 |
| First counter-engaging portion... | 100a |
| Second transmission element... | 200 |
| Second counter-engaging portion... | 200b |
| Adapter element... | 300 |
| Mounting-opening... | 310 |
| Second fastening element... | 310a |
| Snap-in edge... | 311 |
| Guide section... | 320 |
| Fastening rib | 330 |
| Securing device... | 400 |
| Base section... | 410 |
| First fastening element... | 410a |
| Stopping edge... | 411 |
| Guiding element... | 420 |
| Abutment portion... | 430 |
| First rotary axis... | X |
| Direction of rotation... | X1 |
| Second rotary axis... | Y |
| Virtual straight line... | L |
| Angle... | β |
| End position... | P1 |

## Claims

1. Adjusting device (10) for adjusting at least one optically relevant component of a motor vehicle headlamp, which adjusting device (10) comprises:
- an actuating element (50) rotatable about a first rotary axis (X) and having two distal ends and a thread portion (51) arranged in between those ends, and a first and a second engaging portion (50a, 50b), said first engaging portion (50a) disposed on one distal end and said second engaging portion (50b) disposed on the other distal end,
- a coupling element (60) for engaging with the at least one optically relevant component, said coupling element (60) having a counter-thread portion corresponding to the thread portion (51) of the actuating element (50), wherein the coupling element (60) is slidably mounted on the actuating element (50) by means of the counter-thread portion, in order to translate a rotational movement of the actuating element (50) to a linear movement along the first rotary axis (X).
- a housing (70) in which the actuating element (50) is rotatable mounted about the first rotary axis (X) by means of at least one bearing section of the actuating element (50),
- a first transmission element (100) in mechanical engagement with the actuating element (50), said first transmission element (100) having a first counter-engaging portion (100a) corresponding to the first engaging portion (50a) of the actuating element (50), wherein the first transmission element (100) is rotatable about a second rotary axis (Y), wherein the first transmission element (100) is configured to engage with the first engaging portion (50a) in order to transmit an angular motion about the second rotary axis (Y) of the first transmission element (100) into an angular motion of the actuating element (50) about the first rotary axis (X),
- a second transmission element (200) in mechanical engagement with the actuating element (50), said second transmission element (200) having a second counter-engaging portion (200b) corresponding to the second engaging portion (50b) of the actuating element (50), wherein the second transmission element (200) is rotatable about the first rotary axis (X), wherein the second transmission element (200) is configured to engage with the second engaging portion (50b) in order to transmit an angular motion of the second transmission element (200) into an angular motion of the actuating element (50) about the first rotary axis (X), said second transmission element (200) being coaxial to the actuating element (50),
wherein the actuating element (50) with the thread portion (51) in combination with the counter- thread portion of the coupling element (60), in order to translate a rotational movement of the actuating element (50) to a linear movement along the first rotary axis (X), is configured to convert an angular motion of the first or second transmission element (100, 200) into a linear movement of the coupling element (60) along the first rotary axis (X), and
- an adapter element (300) mountable on the housing (70) in an end position (PI), wherein the adapter element (300) is configured to mount the first transmission element (100) in an engaging position, wherein in said engaging position the first transmission element (100) engages with the actuating element (50), and wherein the housing (70) comprises a securing device (400), which is disposed on the housing (70), and wherein the securing device (400) is configured to secure the adapter element (300) in the end position (PI) of the adapter element (300) on the housing (70),
**characterized in that**
the securing device (400) comprises a base section (410) and a first fastening element (410a), which is arranged on the base section (410), wherein the adapter element (300) comprises a mounting-opening (310) and a second fastening element (310a),
wherein the securing device (400) is arranged in a way, that allows the adapter element (300) to be brought into the end position (PI) on the securing device (400) by inserting the mounting-opening (310) on the base section (410) of the securing device (400) and moving the adapter element (300) along the first rotary axis (X) until the end position (PI) is reached, such that the second fastening element (310a) of the adapter element (300) engages with the first fastening element (410a) of the securing device (400) to secure the adapter element (300) in the end position (PI).

2. Adjusting device according to claim 1, **wherein** the adapter element (300) comprises a guide section (320) built as at least one groove, which extends parallel to the first rotary axis (X), and the base section (410) comprises at least one guiding-element (420) corresponding to the at least one groove, wherein the at least one groove is configured to receive the at least one guiding-element (420), when the adapter element (300) is brought into the end position (PI), such that the guiding-element (420) in combination with the at least one groove lead the adapter element (300) into the end position (PI) and secure the adapter element (300) against a rotary movement around the first rotary axis (X), when the adapter element (300) is in the end position (PI).

3. Adjusting device according to claim 1 or 2, **wherein** the adapter element (300) comprises at least one fastening rib (330), which protrudes inside the mounting-opening (310) of the adapter element (300) parallel to the first rotary axis (X).

4. Adjusting device according to any one of the claims 1 to 3, **wherein** the base section (410) of the securing device (400) comprises an abutment-portion (430), wherein the adapter element (300) abuts on the abutment-portion (430), when the adapter element (300) reaches the end position (PI) in order to limit the movement of the adapter element (300) along the first rotary axis (X).

5. Adjusting device according to any one of the claims 1 to 4, **wherein** the first fastening-element (410a) of the securing device (400) is built as latching-element, wherein the second fastening-element (310a) of the adapter element (300) is built as a counter latching-element.

6. Adjusting device according to any one of the claims 1 to 5, **wherein** the first fastening-element (410a) of the securing device (400) is built as a rigid protrusion on the base section (410) and the second fastening-element (310a) is built as a detent lug, wherein the rigid protrusion snaps in the detent lug, when the adapter element (300) reaches the end position (PI).

7. Adjusting device according to claim 6, **wherein** the rigid protrusion comprises a stopping edge (411) and the detent lug comprises a snap-in edge (311), wherein the stopping edge (411) and the snap-in edge (311) are formed positively interlocked and built a virtual straight line (L), when the adapter element (300) is in the end position (PI), and wherein the virtual straight line (L) arranged such that an angle (β) formed between the virtual straight line (L) and the direction of rotation (XI) around the first rotary axis (X) is greater than zero.

8. Adjusting device according to any one of the claims 1 to 7, **wherein** the housing (70) and the securing device (400) are made of an integral piece of material, preferably made of one material.

9. Adjusting device according to any one of claims 1 to 8, **wherein** the second rotary axis (Y) is orthogonal to the first rotary axis (X).

10. Adjusting device according to any one of claims 1 to 9, **wherein** the base section (410) of the securing device (400) is protruding from the housing (70) along the first rotary axis (X).

11. Vehicle headlamp comprising at least one adjusting device according to any one of claim 1 to 10.
